# EUROPÄISCHE PATENTSCHRIFT

(11) **EP 2 117 761 B1**
(45) Veröffentlichungstag und Bekanntmachung des Hinweises auf die Patenterteilung: **26.06.2013**
(21) Anmeldenummer: 07847678.5
(22) Anmeldetag: 03.12.2007
(51) Int. Cl.: B23K 26/04, B23K 26/06, B23K 26/073, B23K 26/20

(54) **LASERSTRAHLBEARBEITUNGSVORRICHTUNG MIT MITTEL ZUM ABBILDEN DER REFLEKTIERTEN RINGEFORMTEN LASERSTRAHLUNG AUF EINER SENSOREINHEIT SOWIE VERFAHREN ZUM JUSTIEREN DER FOKUSLAGE**
LASER-BEAM WORKING DEVICE COMPRISING MEANS FOR FORMING AN IMAGE OF THE REFLECTED ANNULAR LASER RADIATION ON A SENSOR UNIT AND METHOD FOR ADJUSTING THE FOCAL POSITION
DISPOSITIF D'USINAGE À RAYON LASER COMPRENANT DES MOYENS POUR REPRÉSENTER LE RAYONNEMENT LASER DE FORME ANNULAIRE RÉFLÉCHI SUR UNE UNITÉ DE DÉTECTION AINSI QUE PROCÉDÉ POUR AJUSTER LA POSITION DU FOYER

(30) Priorität: 27.12.2006 DE 102006061622; 30.07.2007 DE 102007035715
(43) Veröffentlichungstag der Anmeldung: 18.11.2009
(73) Patentinhaber: Robert Bosch GmbH, 70442 Stuttgart (DE)
(72) Erfinder: RAMSAYER, Reiner, 71701 Schwieberdingen (DE)
(86) Internationale Anmeldenummer: PCT/EP2007/063167
(87) Internationale Veröffentlichungsnummer: WO 2008/080728

(56) Entgegenhaltungen:
- DE-A1- 10 254 847
- GB-A- 1 206 668
- JP-A- 57 001 594
- US-A1- 2002 153 500
- US-A1- 2003 141 002
- DATABASE WPI Week 200426 Derwent Publications Ltd., London, GB; AN 2004-273937 XP002471536 -& JP 2004 066281 A (MITSUBISHI CABLE IND LTD) 4. März 2004 (2004-03-04)

## Beschreibung

Die Erfindung betrifft eine Laserstrahlbearbeitungsvorrichtung nach dem Oberbegriff des Anspruchs 1 und ein Verfahren zum Justinen der Fokuslage als ringförmigen Laserfokus relativ zum mindestens einem Werkstück gemäß dem Oberbegriff des Anspruchs 6. Derartige Vorrichtung und Verfahren ist aus der US 2003/0141002 A1 bekannt Mittels der bekannten Vorrichtung lässt sich die Leistung eines der Bearbeitung zweiter Werkstücke dienenden Laserstrahls regeln, indem die von einem Fügebereich emittierte Wärmestrahlung mittels eines Sensors erfasst wird.

Darüber hinaus ist es aus der DE 102 54 847 A1 der Anmelderin bekannt, mittels eines Standardauskoppelelementes einen Teil des rückreflektierten Lichtes einer Bearbeitungszone auszukoppeln und mittels einer entsprechenden Sensorik zu einer Online-Prozesskontrolle zu benutzen. Aus der US 2002/153500 A1 und der GB-A- 1 206 668 sind weiterhin Laserstrahlbearbeitungsvorrichtungen bekannt, bei denen die Fokuslage eines Laserstrahls bzw. die Fügezone von Werkstücken mittels einer Sensoreinrichtung überwacht werden und die Position wenigstens einer Linse eines optischen Systems zur Erzeugung des Laserstrahls mittels der von der Sensoreinrichtung erfassten Messwerte angepasst wird.

### Offenbarung der Erfindung

Ausgehend von dem dargestellten Stand der Technik liegt der Erfindung die Aufgabe zugrunde, eine Laserstrahlbearbeitungsvorrichtung nach dem Oberbegriff des Anspruchs 1 und ein Verfahren nach dem Oberbegriff des Anspruchs 6 derart weiterzubilden, dass eine alternative Anordnung bzw. Optimierung der Fokuslage relativ zu mindestens einem Werkstück erzielt wird.

Diese Aufgabe wird bei einer Laserstrahlbearbeiturigsvorrichtung mit den Merkmalen des Anspruchs 1, und bei einem Verfahren mit den Merkmalen/Schrotten des Anspruchs 6. gelös,

Vorteilhafte Weiterbildungen der erfindungsgemäßen Laserstrahlbearbeitungsvorrichtung sind in den Unteransprüchen angegeben. In den Rahmen der Erfindung fallen sämtliche Kombinationen aus zumindest zwei von in den Ansprüchen, der Beschreibung und/oder den Figuren offenbarten Merkmalen. Die Erfindung umfasst auch ein Verfahren zum Justieren der Fokuslage eines ringförmigen Laserfokus.

Die erfindungsgemäße Laserstrahlbearbeitungsvorrichtung und das erfindungsgemäße Justierverfahren eignen sich insbesondere für Laserstrahlbearbeitungsvorrichtungen, mit denen ein ringförmiger, beispielsweise kreisringförmiger Laserfokus am Umfang mindestens eines Werkstücks erzeugbar ist, beispielsweise um zwei Werkstücke miteinander zu verschweißen oder um mindestens ein Werkstück thermisch zu härten. Daneben ist der Einsatz einer Sensoreinheit zum Erfassen der Abbildung des Laserfokus auch bei Laserstrahlbearbeitungsvorrichtungen einsetzbar, die zum Erzeugen eines in einer Ebene gelegenen ringförmigen Laserstrahlfokus ausgebildet sind. Bevorzugt wird der Laserfokus derart relativ zu dem Werkstück justiert, dass die Intensitätsverteilung innerhalb des ringförmigen Laserfokus auf dem Werkstück (und somit auch in der Abbildung auf der Sensoreinheit) zumindest näherungsweise konstant ist, um somit ein gleichmäßiges Erhitzen des mindestens einen Werkstücks im Bereich des ringförmigen, d.h. umfangsgeschlossenen Fokus zu gewährleisten. Nach dem Konzept mit der Erfindung ausgebildeten Laserstrahlbearbeitungsvorrichtung kann zum Schweißen, Härten, Anlassen, etc. von Werkstücken ausgebildet werden.

In Weiterbildung der Erfindung ist mit Vorteil vorgesehen, dass die Mittel zum Abbilden der reflektierten Laserstrahlung auf einer Sensoreinheit einen Strahlenteiler umfassen, der die von dem mindestens einen Werkstück reflektierte Laserstrahlung als Beobachtungsstrahlengang in Richtung auf die Sensoreinheit umlenkt. Bevorzugt wird dabei die gesamte Fläche des ringförmigen Laserlichtflecks des Werkstücks auf der Sensoreinheit abgebildet.

Von besonderem Vorteil ist eine Ausführungsform, bei der im Beobachtungsstrahlengang ein Axikon vorgesehen ist, über das der ringförmige Laserfokus auf die Sensoreinheitsebene projizierbar ist. Vorzugsweise ist gleichzeitig im eigentlichen Laserstrahlengang zwischen der mindestens einen Laserstrahlquelle und dem mindestens einen Werkstück ebenfalls ein Axikon zur Erzeugung eines ringförmigen Beobachtungslaserstrahles vorgesehen, wobei vorzugsweise dieser ringförmige Laserstrahl, insbesondere nach Durchlaufen einer Fokussieroptik von einem Kegelspiegel nach radial innen oder radial außen auf den Außen- bzw. Innenumfang mindestens eines Werkstücks umgelenkt wird.

Zur Minimierung von Fremdlichteinflüssen ist eine Ausführungsform von Vorteil, bei der innerhalb des Beobachtungsstrahlengangs mindestens ein optischer Filter für die Laserwellenlänge, beispielsweise ein Bandpassfilter, ein Neutraldichtefilter, etc. vorgesehen ist.

Der Pilotlaserstrahl, gemäß der Erfindung, wird so parametriert, dass er zwar von dem Werkstück reflektiert und auf der Sensoreinheit abgebildet werden kann, er jedoch das Werkstück nicht aufschmilzt. Wesentlich ist es, dass die Fokuslage des Pilotlaserstrahls der Fokuslage des Bearbeitungslaserstrahls entspricht, der Pilotlaserstrahl daher bevorzugt zumindest teilweise denselben optischen Weg zurücklegt, wie der eigentliche Bearbeitungslaserstrahl.

Bevorzugt ist eine Ausführungsform, bei der der Pilotlaserstrahl von derselben Laserstrahlquelle erzeugbar ist, die auch zum Erzeugen des Bearbeitungslaserstrahls vorgesehen ist. Alternativ ist es denkbar, neben der Bearbeitungslaserstrahlquelle eine Pilotlaserstrahlquelle vorzusehen, wobei der Pilotlaserstrahl geeignet in die Optik des Bearbeitungslaserstrahls eingekoppelt werden muss.

Die Erfindung führt auch auf ein Verfahren zum Justieren der Fokuslage eines ringförmigen Laserfokus relativ zumindestens einem Werkstück, wobei gemäß der Erfindung vorgesehen ist, dass die von dem Werkstück reflektierte Lastrahlung auf einer Sensoreinheit abgebildet wird und die Fokuslage, durch Veränderung der Position des Werkstücks in Abhängigkeit der Messdaten der Sensoreinheit, insbesondere in Abhängigkeit der Photoströme von Photodioden der Sensoreinheit dargestellt wird. Bevorzugt erfolgt das Justieren der Fokuslage automatisch als Regelungsverfahren.

### Kurze Beschreibung der Zeichnungen

Weitere Vorteile, Merkmale und Einzelheiten der Erfindung ergeben sich aus der nachfolgenden Beschreibung bevorzugter Ausführungsbeispiele sowie anhand der Zeichnungen; diese zeigen in
- Fig. 1:: eine schematische Darstellung des Aufbaus einer Laserstrahlbearbeitungsvorrichtung mit einer Sensoreinheit, auf der eine von einem Werkstück reflektierte Laserstrahlung abgebildet wird,
- Fig. 2a, b:: ein Werkstück mit einer optimalen Fokuslage in einer Seitenansicht und einer Draufsicht und
- Fig. 3:: ein Werkstück mit fehlpositionierter Fokuslage.

### Ausführungsformen der Erfindung

In den Figuren sind gleiche Bauteile und Bauteile mit der gleichen Funktion mit den gleichen Bezugszeichen gekennzeichnet.

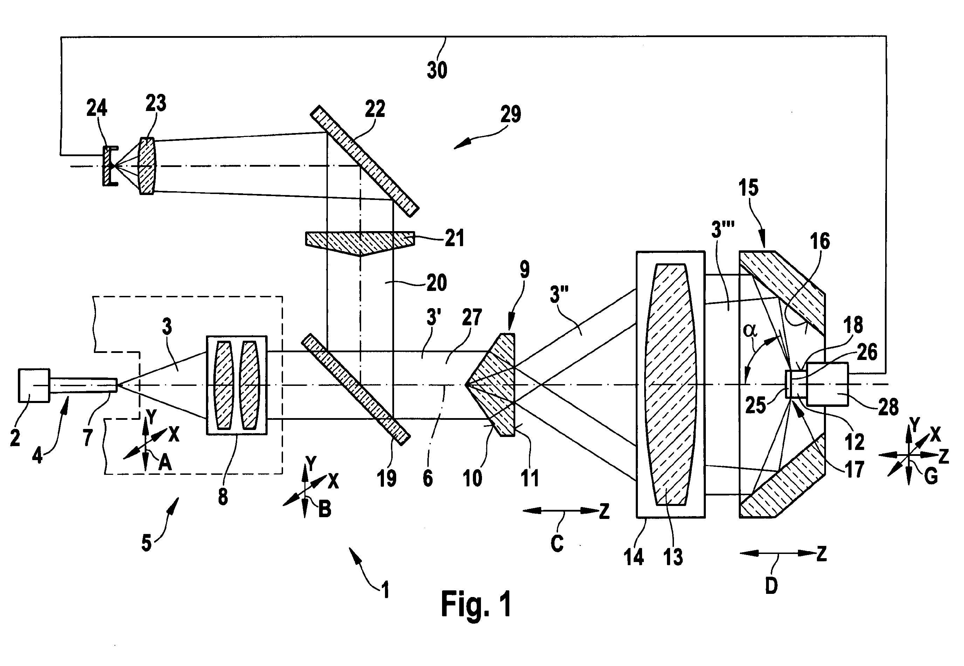

Fig. 1 zeigt eine Laserbearbeitungsvorrichtung 1 zum Härten oder Verschweißen von Werkstücken 12, 25. Die Laserstrahlbearbeitungsvorrichtung weist eine Laserstrahlquelle 2 auf, die einen gepulsten Laserstrahl 3 mit kreisförmiger Querschnittsfläche erzeugt. Der Laserstrahl 3 wird über einen Lichtwellenleiter 4 in eine Optikeinrichtung 5 entlang einer optischen Achse 6 (Z-Achse) eingespeist. Der Mündungsbereich 7 des Lichtwellenleiters 4 ist senkrecht sowie waagerecht (entlang einer Y-Achse und einer X-Achse) zu der optischen Achse 6 verstellbar (Pfeilrichtungen A). Hierdurch kann eine Zentrierung des Laserstrahls 3 bzw. des Laserstrahlengangs 27 erfolgen.

Der aufgeweitete Laserstrahl 3 trifft auf einen mit Abstand zu dem Mündungsbereich 7 des Lichtwellenleiters 4 im Laserstrahlengang 27 angeordneten Kollimator 8 der Optikeinrichtung 5, der den Laserstrahl parallelisiert. Der Kollimator 8 lässt sich senkrecht sowie waagerecht entlang der Y-Achse und der X-Achse (Pfeilrichtungen B) zur optischen Achse 6 (Z-Achse) verstellen, wodurch eine gleichmäßige Verteilung der Intensität des parallelisierten Laserstrahls 3' erreicht werden kann. Der parallel gerichtete Laserstrahl 3' trifft auf ein in axialer Richtung von dem Kollimator 8 beabstandet angeordnetes, im Laserstrahlengang 27 angeordnetes Axikon 9 mit einer kegelförmigen Auftrefffläche 10 und einer ebenen, quer zum Laserstrahlengang 27 angeordneten Abstrahlfläche 11.

Das Axikon 9 lässt sich in axialer Richtung entlang der optischen Achse 6 (Pfeilrichtungen C) verstellen, wodurch ein später noch zu erläuternder Einfallswinkel α auf zwei in axialer Richtung aneinander anliegenden Werkstücken 12, 25 (Grundkörper und Deckel), welche mittels später noch zu erläuternden Justiereinrichtung 28 in allen Raumrichtungen verstellbar sowie winkelig ausrichtbar sind, variiert werden kann.

Mittels des Axikons 9 wird der parallel gerichtete Laserstrahl 3' mit kreisförmiger Querschnittsfläche in einen Laserstrahl 3" mit kreisringförmiger Querschnittsfläche umgewandelt, welcher durch eine ein Fokussierobjektiv 13 enthaltende Fokussiereinrichtung 14 strahlt und axial auf ein in axialer Richtung beabstandeten in den Pfeilrichtungen D verstellbaren Kegelspiegel 15 im Laserstrahlengang 27 mit einer inneren Spiegelfläche 16 trifft. Der Kegelspiegel 15 lenkt den ringförmigen Laserstrahl 3"' nach radial innen unter einem Winkel α zur optischen Achse 6 auf eine seitliche Fügezone 17 im Bereich der Mantelfläche 18 der Werkstücke 12, 25 um. Die zylindrischen Werkstücke 12, 25 und die Fokussiereinrichtung 14 sind derart zueinander beabstandet angeordnet, dass der ringförmige Laserstrahl 3"' an der seitlichen Fügezone 17 der Werkstücke 12, 25 fokussiert wird. Durch Verschieben des Kegelspiegels 15 entlang der optischen Achse 6 kann der Durchmesser des erzeugten Laserstrahlfokus 26 variiert werden. Durch die Wahl des Kegelwinkels kann der Einfallswinkel α des Laserstrahls 3"' auf die Werkstücke 12, 25 relativ zur optischen Achse 6 bzw. zur Symmetrieachse der Werkstücke 12, 25 eingestellt werden. Mittels des gleichzeitig auf die gesamte Fügezone 17 einwirkenden Laserstrahls bzw. Laserfokus entsteht eine gleichmäßige, symmetrische Umfangsschweißnaht.

Anstelle des Kegelspiegels 15 mit Innenspiegelfläche 16 kann auch ein nicht gezeigter Kegelspiegel mit äußerer Kegelfläche eingesetzt werden. Dieser wird bevorzugt in die Werkstücke 12, 25 hineinverfahren, so dass die Umlenkung des Laserstrahls 3"' nicht wie gezeigt nach radial innen, sondern nach radial außen an den Innenumfang der Werkstücke 12, 25 erfolgt.
Die Laserstrahlbearbeitungsvorrichtung 1 umfasst Mittel 29 zum Abbilden der von den Werkstücken 12, 25 reflektierten Laserstrahlung auf einer Sensoreinheit 24. Diese Sensoreinheit 24 ist über ein Datenkabel 30 signalleitend mit der Justiereinrichtung 28 verbunden. Die Justiereinrichtung 28 dient zum Ausrichten der Werkstücke 12, 25 relativ zu dem Laserfokus 26 und damit zur Vergleichmäßigung der Intensität des Laserstrahls 3' in der Fügezone 17 im Kontaktbereich der aneinander anliegenden Werkstücke 12, 25.

Die Mittel 29 zum Abbilden der von den Werkstücken 12, 25 reflektierten Laserstrahlung auf der Sensoreinheit 24 umfassen einen im Laserstrahlengang 27 angeordneten Strahlenteiler 19. Mit Hilfe des Strahlenteilers 19 wird die von den Werkstücken 12, 25 reflektierte Laserstrahlung, die auf dem Kegelspiegel 15 zurückreflektiert wird und von dort durch die Fokussiereinrichtung 14 und das Axikon 9 zurückstrahlt als Beobachtungsstrahlengang 20 aus dem Laserstrahlengang 27 ausgekoppelt. Im Beobachtungsstrahlengang 20 ist ein Axikon 21 angeordnet, um einen ringförmigen Laserstrahl zu erzeugen, der an einem Spiegel 22 um 90° umgelenkt und mittels einer Fokussierlinse 23 auf der Sensoreinheit 24 fokussiert wird. Auf die Sensoreinheit 24, die in dem gezeigten Ausführungsbeispiel als Vier-Quadranten-Photodiode ausgebildet ist, wird also das Abbild des Laserlichtflecks in der Fügezone 17 projiziert. Fällt beispielsweise die Symmetrieachse der rotationssymmetrischen Werkstücke 12, 25 nicht mit der optischen Achse 6 zusammen, resultiert eine ungleichmäßige Intensitätsverteilung in der Fügezone 17, was dazu führt, dass die als IR-Photodioden ausgebildeten Photodioden der Sensoreinheit 24 unterschiedliche Intensitäten messen und damit unterschiedlich große Photoströme erzeugen. Diese Photoströme oder entsprechende Signale werden über das Datenkabel 30 an die Justiereinrichtung 28 übermittelt, die auf Basis dieser Messdaten die Werkstücke 12, 25 derart positioniert (Pfeilrichtungen G), dass die Intensitätsverteilung am Umfang der Werkstücke 12, 25 zumindest näherungsweise gleichmäßig ist, im vorliegenden Fall also die Symmetrieachse der Werkstücke 12, 25 mit der optischen Achse 6 übereinstimmt. Zusätzlich oder alternativ kann die Justiereinrichtung 28 verstellend auf die optischen Bauteile im Laserstrahlengang 27 einwirken. Insbesondere für den Fall, dass als Sensoreinheit 24 eine Digitalkamera eingesetzt wird, kann die Justiereinrichtung 28 bzw. eine nicht gezeigte Auswerteeinheit der Justiereinrichtung 28 die Bilddaten im Hinblick auf die Schärfte der Abbildung, die Erstreckung der Abbildung in radialer Richtung, eine Helligkeitsverteilung etc. auswerten. Die Justierung erfolgt bevorzugt mittels der Justiereinrichtung 28 immer derart, dass eine gleichmäßige und/oder gewünschte Intensitätsverteilung auf den Werkstücken 12, 25 resultiert.

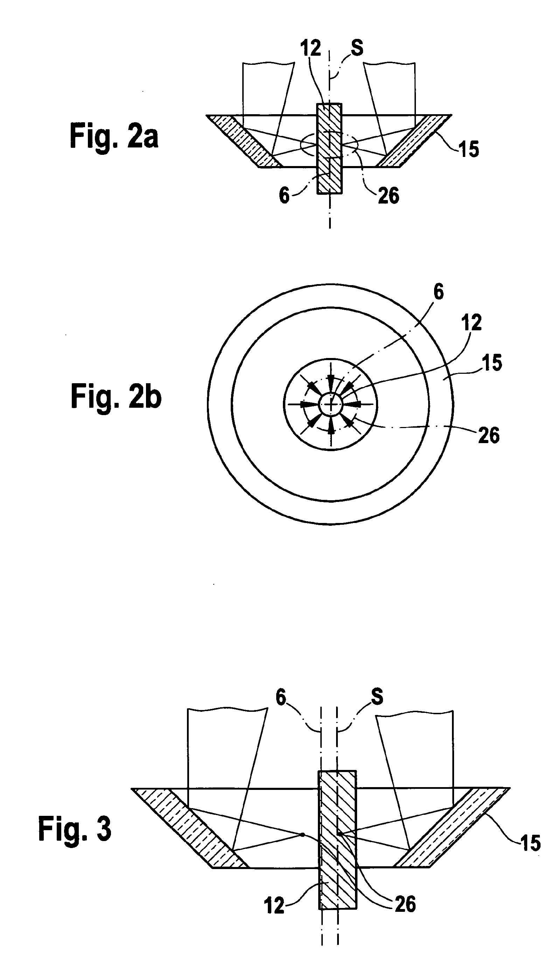

In den Fig. 2a und 2b ist der Fall eines optimal positionierten Laserfokus 26 auf einem rotationssymmetrischen Werkstück 12 gezeigt. Zu erkennen ist, dass eine Symmetrieachse S des Werkstücks 12 mit der optischen Achse 6 zusammenfällt. Die Intensitätsverteilung des Laserfokus 26 ist über den Umfang des Werkstücks 12 zumindest näherungsweise konstant.

In Fig. 3 ist eine verschobene Fokuslage gezeigt. Zu erkennen ist, dass die Symmetrieachse S des Werkstücks 12 mit Abstand zur optischen Achse 6 verläuft. Dies führt zu einer ungleichmäßigen Intensitätsverteilung über den Umfang des Werkstücks 12, was dazu führt, dass die Intensität der von dem Werkstück 12 reflektierten Laserstrahlung bzw. die Intensität der Abbildung auf die Sensoreinheit 24 ungleichmäßig ist.

## Patentansprüche

1. Laserstrahlschweißvorrichtung zum Verschweißen zweier Werkstücke (12, 25), mit mindestens einer Laserstrahlquelle (2) zum Beaufschlagen mindestens eines der Werkstücke (12, 25) mit einem ringförmigen Laserfokus (26), wobei Mittel (29) zum Abbilden der von dem Werkstück (12, 25) reflektierten Laserstrahlung auf einer Sensoreinheit (24) vorgesehen sind, wobei die Sensoreinheit (24) mindestens eine, vorzugsweise mehrere Photodioden umfasst und vorzugsweise als Vier-Quadranten-Photodiode oder als Digitalkamera ausgebildet ist, **dadurch gekennzeichnet, dass** eine Justiereinrichtung (28) zum Justieren der Fokuslage relativ zu dem mindestens einen Werkstück (12, 25) in Abhängigkeit der von der Sensoreinheit (24) erfassten Messdaten vorgesehen ist, wobei die Justiereinrichtung (28) derart ausgebildet ist, dass die Justiereinrichtung (28) eine zumindest näherungsweise gleichmäßige Intensitätsverteilung des ringförmigen Laserfokus (26) auf dem Werkstück (12, 25) einstellt, und, dass die Justiereinrichtung (28) zum Ausrichten des mindestens einen Werkstücks (12, 25) relativ zu dem Laserfokus (26) ausgebildet ist, **wobei Mittel zum Erzeugen eines Pilotlaserstrahls vorgesehen sind, der zwar von dem Werkstück (12, 25) reflektiert wird, dieses aber nicht aufschmilzt, wobei der Pilotlaserstrahl derart ausgerichtet ist, dass die Fokuslage des Pilotlaserstrahls der Fokuslage des Bearbeitungslaserstrahls entspricht.**

2. Laserstrahlschweißvorrichtung nach Anspruch 1,
**dadurch gekennzeichnet,**
**dass** die Mittel (29) zum Abbilden einen im Laserstrahlengang (27) zwischen der Laserstrahlquelle (2) und dem Werkstück (12, 25) angeordneten Strahlenteiler (19) umfassen, der derart ausgebildet und angeordnet ist, dass er die von dem Werkstück (12, 25) reflektierte Laserstrahlung als Beobachtungsstrahlengang (20) aus dem Laserstrahlengang (27) auskoppelt.

3. Laserstrahlschweißvorrichtung nach Anspruch 2,
**dadurch gekennzeichnet,**
**dass** in dem Beobachtungsstrahlengang (20) ein Axikon (9, 21) angeordnet ist.

4. Laserstrahlschweißvorrichtung nach einem der Ansprüche 1 bis 3,
**dadurch gekennzeichnet,**
**dass** im Beobachtungsstrahlengang (20) mindestens ein optischer Filter angeordnet ist.

5. Laserstrahlschweißvorrichtung nach Anspruch 1,
**dadurch gekennzeichnet,**
**dass** die Laserstrahlquelle (2) den Pilot- und den Bearbeitungslaserstrahl erzeugend ausgebildet ist.

6. Verfahren zum Justieren der Fokuslage als ringförmigen Laserfokus (26) relativ zu mindestens einem Werkstück (12, 25), **dadurch gekennzeichnet, dass** das Abbilden der von dem mindestens einen Werkstück (12, 25) reflektierten Laserstrahlung auf einer Sensoreinheit (24) und das Justieren der Fokuslage in Abhängigkeit der Messdaten der Sensoreinheit (24) derart erfolgt, dass das Ausrichten des wenigstens einen Werkstücks (12, 25) relativ zu dem ringförmigen Laserfokus (26) und damit zur Vergleichmäßigung der Intensität eines Laserstrahls (3') erfolgt, und wobei mittels des Verfahrens zwei Werkstücke (12, 25) miteinander verschweißt werden, **wobei ein Pilotlaserstrahl erzeugt wird, der zwar von dem Werkstück (12, 25) reflektiert wird, dieses aber nicht aufschmilzt, wobei der Pilotlaserstrahl derart ausgerichtet ist, dass die Fokuslage des Pilotlaserstrahls der Fokuslage des Bearbeitungslaserstrahls entspricht.**

7. Verfahren nach Anspruch **6,**
**dadurch gekennzeichnet,**
**dass** das Justieren der Fokuslage automatisch als Regelungsverfahren erfolgt.

## Claims

1. Laser beam welding apparatus for welding together two workpieces (12, 25), having at least one laser beam source (2) for acting upon at least one of the workpieces (12, 25) with an annular laser focus (26), wherein means (29) for imaging the laser radiation reflected by the workpiece (12, 25) on a sensor unit (24) are provided, wherein the sensor unit (24) comprises at least one, preferably a plurality of photodiodes and is preferably configured as a four-quadrant photodiode or as a digital camera, **characterized in that** an adjustment device (28) for adjusting the focal position relative to the at least one workpiece (12, 25) in dependence on the measurement data captured by the sensor unit (24) is provided, wherein the adjustment device (28) is configured such that the adjustment device (28) sets an at least approximately uniform intensity distribution of the annular laser focus (26) on the workpiece (12, 25) and **in that** the adjustment device (28) is configured for orientating the at least one workpiece (12, 25) relative to the laser focus (26), wherein means for generating a pilot laser beam are provided, which is reflected by the workpiece (12, 25) but does not melt it, wherein the pilot laser beam is orientated such that the focal position of the pilot laser beam corresponds to the focal position of the machining laser beam.

2. Laser beam welding apparatus according to Claim 1, **characterized in that** the means (29) for imaging comprise a beam splitter (19) which is arranged in the laser beam path (27) between the laser beam source (2) and the workpiece (12, 25) and is configured and arranged such that it couples the laser radiation reflected by the workpiece (12, 25) out of the laser beam path (27) in the form of an observation beam path (20).

3. Laser beam welding apparatus according to Claim 2, **characterized in that** an axicon (9, 21) is arranged in the observation beam path (20).

4. Laser beam welding apparatus according to one of Claims 1 to 3, **characterized in that** at least one optical filter is arranged in the observation beam path (20).

5. Laser beam welding apparatus according to Claim 1, **characterized in that** the laser beam source (2) is configured to generate the pilot laser beam and the machining laser beam.

6. Method for adjusting the focal position as an annular laser focus (26) relative to at least one workpiece (12, 25), **characterized in that** the laser radiation reflected by the at least one workpiece (12, 25) is imaged on a sensor unit (24) and the focal position is adjusted in dependence on the measurement data of the sensor unit (24) such that the at least one workpiece (12, 25) is orientated relative to the annular laser focus (26) and thus for making the intensity of a laser beam (3') uniform, and wherein the method is used to weld together two workpieces (12, 25), wherein a pilot laser beam is generated, which is reflected by the workpiece (12, 25) but does not melt it, wherein the pilot laser beam is orientated such that the focal position of the pilot laser beam corresponds to the focal position of the machining laser beam.

7. Method according to Claim 6, **characterized in that** the focal position is adjusted automatically as a regulation method.

## Revendications

1. Dispositif de soudage au laser pour souder deux pièces (12, 25), comprenant au moins une source de rayon laser (2) pour exposer au moins l'une des pièces (12, 25) à un foyer de laser (26) de forme annulaire, des moyens (29) étant prévus pour représenter le rayonnement laser réfléchi par la pièce (12, 25) sur une unité de détection (24), l'unité de détection (24) comprenant au moins une, de préférence plusieurs photodiodes et étant de préférence réalisée sous la forme d'une photodiode à quatre quadrants ou sous la forme d'une caméra numérique, **caractérisé en ce qu'**il est prévu un dispositif d'ajustement (28) pour ajuster la position du foyer par rapport à l'au moins une pièce (12, 25) en fonction des données de mesure acquises par l'unité de détection (24), le dispositif d'ajustement (28) étant configuré de telle sorte que le dispositif d'ajustement (28) règle une distribution au moins approximativement homogène de l'intensité du foyer de laser (26) de forme annulaire sur la pièce (12, 25), et **en ce que** le dispositif d'ajustement (28) est configuré pour orienter l'au moins une pièce (12, 25) par rapport au foyer de laser (26), des moyens étant prévus pour générer un rayon laser pilote qui, bien qu'il soit réfléchi par la pièce (12, 25), ne met pas celle-ci en fusion, le rayon laser pilote étant orienté de telle sorte que la position du foyer du rayon laser pilote correspond à la position du foyer du rayon laser d'usinage.

2. Dispositif de soudage au laser selon la revendication 1, **caractérisé en ce que** les moyens (29) de représentation comprennent un séparateur de rayons (19) disposé sur le trajet du rayon laser (27) entre la source de rayon laser (2) et la pièce (12, 25), lequel est disposé et configuré de telle sorte qu'il découple hors du trajet du rayon laser (27) le rayonnement laser réfléchi par la pièce (12, 25) en tant que trajet de rayon d'observation (20).

3. Dispositif de soudage au laser selon la revendication 2, **caractérisé en ce qu'**un axicon (9, 21) est disposé dans le trajet de rayon d'observation (20).

4. Dispositif de soudage au laser selon l'une des revendications 1 à 3, **caractérisé en ce qu'**au moins un filtre optique est disposé dans le trajet de rayon d'observation (20).

5. Dispositif de soudage au laser selon la revendication 1, **caractérisé en ce que** la source de rayon laser (2) est configurée pour générer le rayon laser pilote et le rayon laser d'usinage.

6. Procédé d'ajustement de la position du foyer sous la forme d'un foyer de laser (26) de forme annulaire par rapport à au moins une pièce (12, 25), **caractérisé en ce que** la représentation du rayonnement laser réfléchi par l'au moins une pièce (12, 25) sur une unité de détection (24) et l'ajustement de la position du foyer en fonction des données de mesure de l'unité de détection (24) s'effectuent de telle sorte que l'orientation de l'au moins une pièce (12, 25) par rapport au foyer de laser (26) de forme annulaire a lieu et entraîne ainsi l'homogénéisation de l'intensité d'un rayon laser (3'), et deux pièces (12, 25) étant soudées l'une avec l'autre au moyen du procédé, un rayon laser pilote étant généré qui, bien qu'il soit réfléchi par la pièce (12, 25), ne met pas celle-ci en fusion, le rayon laser pilote étant orienté de telle sorte que la position du foyer du rayon laser pilote correspond à la position du foyer du rayon laser d'usinage.

7. Procédé selon la revendication 6, **caractérisé en ce que** l'ajustement de la position du foyer s'effectue automatiquement en tant que procédé de régulation.
